# FASCICULE DE BREVET EUROPEEN

(11) **EP 3 899 367 B1**
(45) Date de publication et mention de la délivrance du brevet: **07.02.2024**
(21) Numéro de dépôt: 19817702.4
(22) Date de dépôt: 10.12.2019
(51) Int. Cl.: F23C 99/00

(54) **RÉACTEUR DE COMBUSTION EN BOUCLE CHIMIQUE À TOIT PLAT**
FLACHDACHREAKTOR FÜR CHEMICAL-LOOPING-VERBRENNUNG
FLAT-ROOF CHEMICAL LOOPING COMBUSTION REACTOR

(30) Priorité: 17.12.2018 FR 1873092
(43) Date de publication de la demande: 27.10.2021
(73) Titulaire: IFP Energies nouvelles, 92852 Rueil-Malmaison Cedex (FR); TotalEnergies OneTech, 92400 Courbevoie (FR)
(72) Inventeur: CLOUPET, Ann, 92852 RUEIL-MALMAISON CEDEX (FR); TEBIANIAN, Sina, 92852 RUEIL-MALMAISON CEDEX (FR); GUILLOU, Florent, 92852 RUEIL-MALMAISON CEDEX (FR); BERTHOLIN, Stephane, 92852 RUEIL-MALMAISON CEDEX (FR); TILLAND, Airy, 92852 RUEIL-MALMAISON CEDEX (FR); AMBLARD, Benjamin, 92852 RUEIL-MALMAISON CEDEX (FR); YAZDANPANAH, Mahdi, 76600 LE HAVRE (FR); REDDY KARRI, Surya, Naperville, Illinois 60564 (US); KNOWLTON, Tedd, Willowbrook, Illinois 60527 (US)
(74) Mandataire: IFP Energies nouvelles
(86) Numéro de dépôt international: PCT/EP2019/084511
(87) Numéro de publication internationale: WO 2020/126704

(56) Documents cités:
- WO-A2-2011/151535
- JP-A- S57 209 635
- US-A1- 2016 030 904

## Description

### Domaine technique

La présente invention concerne le domaine de la combustion de charges hydrocarbonées par oxydo-réduction en boucle chimique (CLC) opérant en lit fluidisé, et plus spécifiquement concerne un réacteur de combustion CLC opérant en lit fluidisé particulièrement bien adapté à la combustion de charges hydrocarbonées solides ou liquides.

### Technique antérieure

La combustion en boucle chimique, ou procédé de Chemical Looping Combustion (CLC) dans sa terminologie anglo-saxonne, est un procédé consistant à mettre en oeuvre des réactions d'oxydo-réduction d'une masse active, typiquement un oxyde métallique, pour décomposer la réaction de combustion d'une charge hydrocarbonée en deux réactions successives : une première réaction d'oxydation de la masse active au contact d'un gaz oxydant, typiquement de l'air, dans au moins une zone d'oxydation, et une deuxième réaction de réduction de la masse active au contact de la charge dont on souhaite la combustion dans au moins une zone de combustion.

La masse active oxydo-réductrice, qui cède une partie de l'oxygène qu'elle renferme au contact avec la charge dans la zone de combustion, joue ainsi un rôle de transporteur d'oxygène entre ladite zone de combustion et la zone d'oxydation où elle est à nouveau oxydée.

Ce matériau solide se présente sous la forme de particules fluidisables, appartenant aux groupes A, B ou C de la classification de Geldart qui est basée sur la taille des particules et sur leur écart de masse volumique avec le gaz, et souvent au groupe B. Les particules sont mises en contact dans les zones réactionnelles, avec soit le gaz oxydant soit la charge, sous forme de lits fluidisés, et sont généralement transportées d'une zone à l'autre sous une forme fluidisée. L'ensemble des particules transportées sous une forme fluidisée est communément appelé lit fluidisé circulant ou transporté.

Ces particules sont oxydées au contact d'un gaz oxydant, typiquement de l'air (ou de la vapeur d'eau), dans au moins une première zone réactionnelle, appelée réacteur d'oxydation ou réacteur air. Elles sont ensuite transportées dans au moins une seconde zone réactionnelle appelée réacteur de réduction ou réacteur de combustion ou encore réacteur fuel, où elles sont mises en contact avec une charge hydrocarbonée solide (ex : charbon, le coke, le coke de pétrole appelé « pet-coke » en anglais, la biomasse, les sables bitumineux, les déchets ménagers), liquide (ex. : fuel, bitume, diesel, essences, huile de schiste, etc.) ou gazeuse (ex. : gaz naturel, syngas, biogaz, gaz de schiste) dont on souhaite effectuer la combustion. L'oxygène transporté par les particules de la masse active alimente la combustion de la charge. Il en résulte un effluent gazeux formé par la combustion de la charge et un flux de particules réduites. Les particules sont renvoyées au réacteur air pour y être ré-oxydées, fermant ainsi la boucle.

Le procédé CLC permet de produire de l'énergie (vapeur, électricité...) par récupération de la chaleur dégagée par les réactions de combustion tout en facilitant la capture du dioxyde de carbone (CO₂) émis lors de la combustion grâce à la production de fumées riches en CO₂. Le captage du CO₂ peut en effet se faire après condensation de la vapeur d'eau et compression des fumées, et celui-ci peut alors être stocké, par exemple dans un aquifère profond, ou être valorisé, par exemple en l'employant pour améliorer le rendement des exploitations pétrolières dans des procédés de récupération assistée du pétrole (EOR pour Enhanced Oil Recovery en anglais) ou de gaz (EGR pour Enhanced Gas Recovery en anglais).

Le procédé CLC peut également permettre la production de gaz de synthèse, voire d'hydrogène, en contrôlant la combustion et en mettant en oeuvre les purifications requises en aval du procédé de combustion.

Un autre avantage résulte de ce mode de combustion : la production d'un flux très riche en azote, qui est l'air appauvri obtenu à l'issue de l'oxydation de la masse active dans le réacteur air. Selon le degré de pureté atteint, ce flux d'azote peut être valorisé dans diverses applications, notamment dans le domaine de l'industrie pétrolière. Il peut par exemple être utilisé en raffinerie en tant que gaz inerte dans différents procédés de raffinage du pétrole ou pour le traitement des eaux de production, ou en tant que gaz injecté dans le sous-sol dans des procédés EOR.

Différents régimes de fluidisation peuvent être mis en oeuvre dans les différentes unités de l'installation CLC, en particulier dans les réacteurs d'oxydation et de réduction opérant en lit fluidisé. Le régime de fluidisation appliqué dépend en effet de l'opération à réaliser (combustion de la charge, oxydation des particules du porteur d'oxygène, transport des particules, séparation solide/solide, séparation solide/gaz) et du type de charge traitée.

Par exemple, la combustion d'une charge solide elle-même sous forme de particules, nécessite un temps de contact avec les particules du porteur d'oxygène plus grand que la combustion d'une charge gazeuse, ce qui se traduit généralement par la mise en oeuvre dans le réacteur de combustion d'une zone comportant un lit fluidisé dense, opérant selon un régime de fluidisation hétérogène correspondant à un lit dit bouillonnant (présence de bulles dans le lit) ou turbulent (régime d'écoulement préféré), dans lequel les particules du porteur d'oxygène et de la charge solide sont mises en contact pour une première étape de combustion consistant essentiellement à une gazéification de la charge solide. Une deuxième étape est généralement nécessaire pour tendre vers une combustion totale, avec la mise en contact des particules du porteur d'oxygène et la charge gazéifiée. Cette deuxième étape est généralement réalisée dans la première zone réactionnelle, et peut aussi être réalisée dans une deuxième zone réactionnelle comportant un lit fluidisé dilué, opérant selon un régime de fluidisation transporté (correspondant au régime des lits fluidisés circulants) impliquant des vitesses de gaz plus importantes. Cette zone réactionnelle correspond généralement à une partie du réacteur formant un conduit sensiblement allongé et vertical communément appelé « riser », terme issu de la terminologie anglo-saxonne et communément utilisé par l'homme du métier. Une telle configuration impliquant une première zone de combustion en lit fluidisé dense surmontée par une deuxième zone de combustion de type riser opérant en lit fluidisé dense est par exemple décrite dans la demande de brevet WO11151535 portant sur un procédé CLC spécifique aux charges hydrocarbonées solides.

Dans le cas de la combustion en boucle chimique de charges gazeuses, le temps de contact nécessaire entre les particules de la masse active et la charge étant moins important que dans le cas de charges solides ou liquides, un réacteur de type riser peut suffire pour réaliser la combustion de la charge.

De manière générale, l'augmentation de la vitesse de gaz dans un lit fluidisé génère différents régimes d'écoulement. Selon le groupe de la classification de Geldart auquel appartiennent les particules de solide, différents régimes de fluidisation sont possibles lorsque la vitesse du gaz croît.

Avec des particules du groupe B de la classification de Geldart par exemple, en augmentant progressivement le débit de gaz, l'écoulement passe du régime à bulles (lit bouillonnant qui est un lit dense), au régime de pistonnage, dit 'slugging' en anglais (suivant les hauteur et diamètre de lit), au régime turbulent, au régime de fluidisation rapide (lit circulant) puis au régime de transport. Bien qu'à faible vitesse du gaz le régime de fluidisation peut différer selon le groupe des particules, elles atteignent toutes, quel que soit leur groupe, un régime de fluidisation turbulent, puis un régime de fluidisation rapide, suivi d'un régime de transport lorsque la vitesse du gaz croît.

Le régime de pistonnage apparait lorsque le diamètre des bulles devient comparable au diamètre de la colonne : avec des particules du groupe B, les bulles grossissent en s'élevant dans le réacteur, leur taille pouvant atteindre à l'extrême le diamètre du réacteur. Dans ce cas, le régime atteint est celui du pistonnage, générant des écoulements en 'bouchons'. Les grosses bulles éclatent à la surface du lit ou en paroi, avec des agglomérats denses de solide entrainés dans leur sillage, générant de fortes hétérogénéités d'écoulement, et se traduisant par de fortes fluctuations de pression et des vibrations.

Le régime turbulent est quant à lui particulièrement intéressant pour les procédés industriels car il présente un mélange beaucoup plus homogène des phases et un transfert de masse et thermique très important, par rapport aux régimes bouillonnant et de pistonnage. C'est un régime qui correspond à une forte agitation des particules : au fur et à mesure que la vitesse de fluidisation augmente, la taille et le nombre des bulles croissent progressivement et l'agitation de la suspension devient de plus en plus violente. Cette agitation est produite par l'ascension des bulles et par le fait qu'elles entraînent dans leur sillage une partie de la suspension. À des vitesses importantes, la forme des bulles devient irrégulière. Néanmoins, même si les grosses bulles formées n'atteignent pas le diamètre du réacteur, celles-ci peuvent engendrer de grosses fluctuations de pression et des vibrations au sein du lit, typiquement lors de leurs brisures au sein du lit, en surface du lit et en parois du réacteur.

Le régime de pistonnage ainsi que la formation de grosses bulles sont donc indésirables pour plusieurs raisons : le mélange du solide et gaz est moins bon (moins homogène), l'homogénéité de la température du réacteur n'est plus assurée, et les fortes fluctuations de pression et vibrations sur les parois et le fond du réacteur sont nuisibles à la tenue mécanique du réacteur.

Dans le cas d'un réacteur en lit fluidisé connecté par sa partie supérieure à un conduit allongé de diamètre plus faible (« riser »), tel que le réacteur CLC mentionné plus haut et décrit dans la demande WO11151535, la formation de grosses bulles peut s'avérer être d'autant plus problématique que les agglomérats denses de solide entrainés peuvent provoquer à leur tour un phénomène de pistonnage dans le conduit allongé.

Il est connu des dispositifs pour diminuer le phénomène de pistonnage. Par exemple le brevet US9512364 B2 portant sur un procédé d'hydropyrolyse pour la transformation de la biomasse sous forme de particules en carburants liquides mettant en oeuvre des lits bouillonnants catalytiques, divulgue un réacteur anti-pistonnage comportant des inserts latéraux, qui sont des éléments d'obstacle, d'obstruction ou de constriction placés à intervalles réguliers dans le lit afin d'inhiber le pistonnage dans le réacteur. De tels inserts ne sont pas toujours simples à mettre en oeuvre, et ce type de réacteur peut nécessiter une maintenance importante lié au possible cokage des inserts.

La présente invention propose de fournir une autre solution dédiée au CLC pour diminuer les problèmes liés au phénomène de pistonnage, en particulier limiter les fortes fluctuations de pression dans le réacteur de combustion et notamment dans la partie allongée du réacteur (« riser »).

### Objectifs et Résumé de l'invention

La présente invention a pour objectif de fournir un réacteur de combustion CLC permettant de limiter les effets indésirables engendrés par la mise en oeuvre de régimes de fluidisation de pistonnage et de turbulence dans le réacteur, en particulier de limiter les fortes fluctuations de pression provoquées par la formation de grosses bulles et leur éclatement. Elle vise ainsi à préserver la tenue mécanique du réacteur de combustion, à assurer une homogénéité de température dans le réacteur, ainsi qu'à assurer une homogénéité du mélange gaz/particules dans le réacteur en vue d'une combustion optimale.

Ainsi, pour atteindre au moins l'un des objectifs susvisés, parmi d'autres, la présente invention propose, selon un premier aspect, un réacteur de combustion pour la combustion en boucle chimique configuré pour opérer en lit fluidisé comportant :
- une enceinte inférieure formant une première zone réactionnelle pour la combustion d'une charge hydrocarbonée en présence de particules d'une masse active d'oxydo-réduction, ladite enceinte inférieure comportant une première paroi latérale et étant configurée pour comporter un lit fluidisé dense ;
- une enceinte supérieure de forme allongée et ayant une section de passage plus petite que la section de passage de ladite enceinte inférieure, formant une deuxième zone réactionnelle pour la combustion des effluents gazeux issus de la combustion dans ladite partie inférieure, ladite enceinte supérieure comportant une deuxième paroi latérale et étant configurée pour comporter un lit fluidisé dilué ;
- une partie intermédiaire connectant ladite enceinte inférieure à ladite enceinte supérieure, ladite partie intermédiaire comportant une paroi interne formant un angle droit avec la première paroi latérale de l'enceinte inférieure et avec la deuxième paroi latérale de l'enceinte supérieure.

Selon un mode de réalisation, l'enceinte inférieure comporte un système d'injection principal pour un gaz de fluidisation principal positionné à la base de l'enceinte inférieure.

Selon un mode de réalisation, l'enceinte inférieure comporte en outre un système d'injection secondaire pour un gaz de fluidisation secondaire positionné au sommet de l'enceinte inférieure.

Selon un mode de réalisation, l'enceinte inférieure comporte en outre un système d'injection tertiaire pour un gaz de fluidisation tertiaire positionné entre le système d'injection principal et le sommet de l'enceinte inférieure, configuré pour contrôler le niveau du lit dense.

Selon un mode de réalisation, la partie supérieure du réacteur de combustion comporte un segment pénétrant dans la partie inférieure de l'enceinte d'une hauteur h de préférence comprise entre 0,01xH et 0,3xH, H étant la hauteur de l'enceinte inférieure du réacteur de combustion.

Selon un mode de réalisation, le ratio de la section de passage de l'enceinte inférieure sur la section de passage de l'enceinte supérieure est compris entre 2 et 15, et de préférence entre 3 et 10.

Selon un mode de réalisation, les enceintes inférieure et supérieure du réacteur ont une forme de parallélépipède, de préférence rectangle.

Selon un deuxième aspect, la présente invention propose un procédé de combustion en boucle chimique d'une charge hydrocarbonée mettant en oeuvre un réacteur de combustion selon l'invention ou l'installation selon l'invention, comportant les étapes suivantes :
- on met en contact des particules d'une masse active oxydo-réductrice avec la charge hydrocarbonée dans l'enceinte inférieure du réacteur de combustion au sein d'un lit fluidisé dense formé par l'injection d'un gaz de fluidisation principal ;
- on effectue une combustion des effluents gazeux issus l'enceinte inférieure en présence de particules de la masse active oxydo-réductrice dans l'enceinte supérieure du réacteur de combustion, au sein d'un lit fluidisé dilué ;
- on effectue une oxydation des particules de la masse active oxydo-réductrice ayant séjourné dans le réacteur de combustion au sein d'un réacteur d'oxydation opérant en lit fluidisé avant de les renvoyer vers le réacteur de combustion.

Selon un mode de réalisation, la charge hydrocarbonée est une charge solide, de préférence choisie parmi le charbon, le coke, le coke de pétrole, la biomasse, les sables bitumineux et les déchets ménagers et on effectue une séparation de particules d'imbrûlés et des particules de la masse active oxydo-réductrice contenues dans un mélange gazeux comportant des gaz de combustion issu de l'enceinte supérieure du réacteur de combustion dans un séparateur de particules solide/solide, on envoie les particules de la masse active oxydo-réductrice ainsi séparées vers le réacteur d'oxydation, et on recycle les particules d'imbrûlés, éventuellement séparées des gaz de combustion dans au moins un étage de séparation gaz-solide, dans le réacteur de combustion.

Selon un mode de réalisation, la vitesse superficielle du gaz dans l'enceinte inférieure du réacteur de combustion est comprise entre 0,3 m/s et 3 m/s, et dans lequel la vitesse superficielle du gaz dans l'enceinte supérieure du réacteur de combustion est comprise entre 3 m/s et 15 m/s.

Selon un mode de réalisation, la température dans le réacteur de combustion est comprise entre 600°C et 1400°C, de préférence entre 800°C et 1000°C.

Selon un mode de réalisation, on injecte un gaz de fluidisation secondaire au sommet de l'enceinte inférieure du réacteur de combustion, de préférence formant un jet selon une direction formant un angle β compris entre 0 et 90° avec la verticale.

De préférence, le débit du gaz de fluidisation secondaire est compris entre 0,02×Q_{GP} et 0,2×Q_{GP}, Q_{GP} étant le débit du gaz de fluidisation principal.

Selon un mode de réalisation, on injecte un gaz de fluidisation tertiaire dans une zone du lit dense dans l'enceinte inférieure du réacteur de combustion de manière à contrôler le niveau du lit dense.

Selon un mode de réalisation, les particules de la masse active oxydo-réductrice appartiennent au groupe B selon la classification de Geldart.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Liste des figures

La figure 1 est un schéma de principe de mise en oeuvre d'un procédé CLC.
La figure 2 représente un réacteur de combustion CLC selon l'art antérieur.
La figure 3 représente un réacteur de combustion CLC selon un premier mode de réalisation de l'invention.
La figure 4 représente un réacteur de combustion CLC selon un deuxième mode de réalisation de l'invention.

Sur les figures, les mêmes références désignent des éléments identiques ou analogues.

### Description des modes de réalisation

L'objet de l'invention est de proposer un réacteur de combustion pour la combustion en boucle chimique de géométrie spécifique adaptée pour la combustion de charges hydrocarbonées solides ou liquides, et de préférence de charges solides, permettant de limiter les fortes fluctuations de pression liées à la présence de grosses bulles et au phénomène de pistonnage rencontrés dans la mise en régime turbulent de lits fluidisés.

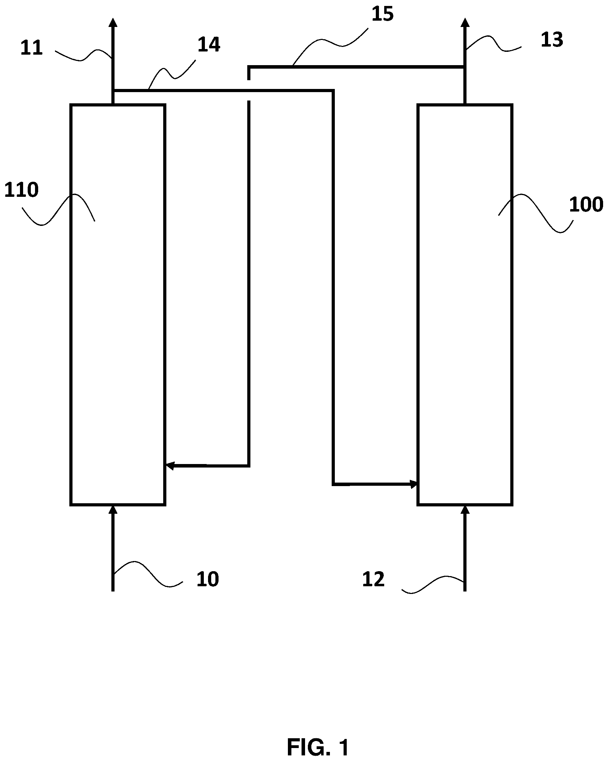

Avant de décrire plus en détails le réacteur de combustion selon l'invention, l'installation et le procédé CLC mettant en oeuvre un tel réacteur sont décrits ci-après, en relation avec la figure 1.

Dans la présente description, les expressions «masse active oxydo-réductrice» ou de manière abrégée « masse active », «matériau transporteur d'oxygène», « solide porteur d'oxygène » ou « porteur d'oxygène » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène.

Il convient de noter que, de manière générale, les termes oxydation et réduction sont utilisés en relation avec l'état respectivement oxydé ou réduit de la masse active. Le réacteur d'oxydation, aussi appelé réacteur air, est celui dans lequel la masse oxydo-réductrice est oxydée et le réacteur de réduction, aussi appelé réacteur fuel ou réacteur de combustion, est le réacteur dans lequel la masse oxydo-réductrice est réduite. Les réacteurs opèrent en lit fluidisé et la masse active circule entre le réacteur d'oxydation et le réacteur de réduction. La technologie du lit fluidisé circulant est utilisée pour permettre le passage continu de la masse active de son état oxydé dans le réacteur d'oxydation à son état réduit dans le réacteur de réduction.

### Installation et procédé CLC selon l'invention

La figure 1 est un schéma représentant le principe de fonctionnement général d'une combustion en boucle chimique. Il n'est en rien limitatif de l'installation et du procédé CLC intégrant le réacteur de combustion selon l'invention.

Un porteur d'oxygène réduit 15 est mis au contact d'un flux d'air 10 dans une zone réactionnelle 110 précédemment définie comme le réacteur d'oxydation (ou réacteur air). Il en résulte un flux d'air appauvri 11 et un flux de particules ré-oxydées 14. Le flux de particules de porteur d'oxygène oxydé 14 est transféré dans la zone de réduction 100 précédemment définie comme le réacteur de combustion (ou réacteur de réduction). Le flux de particules 14 est mis au contact d'un combustible 12, qui est une charge hydrocarbonée. Il en résulte un effluent de combustion 13 et un flux de particules de porteur d'oxygène réduit 15. Dans un souci de simplification, la représentation de la figure 1 ne comprend pas les divers équipements pouvant faire partie de l'unité CLC, pour la séparation solide/gaz, la séparation solide/solide, l'échange de chaleur, la mise en pression, l'étanchéité des gaz entre les réacteurs (ex :siphons), le stockage du solide, le contrôle des flux solides (ex : vannes mécaniques ou pneumatiques) ou les éventuelles recirculations de matière autour des réacteurs d'oxydation et de combustion.

Dans la zone de combustion 100, la charge hydrocarbonée 12 est mise en contact à cocourant avec la masse active oxydo-réductrice sous forme de particules pour réaliser la combustion de ladite charge par réduction de la masse active oxydo-réductrice.

La masse active oxydo-réductrice MₓO_{y}, M représentant un métal, est réduite à l'état MₓO_{y-2n-m/2}, par l'intermédiaire de la charge hydrocarbonée CₙHₘ, qui est corrélativement oxydée en CO₂ et H₂O, selon la réaction (1) ci-dessous, ou éventuellement en mélange CO + H₂ selon les proportions utilisées.

CₙHₘ + MₓO_{y} **→** n CO₂+ m/2 H₂O + MₓO_{y-2n-m/2}

La combustion totale de la charge hydrocarbonée est généralement visée.

La combustion de la charge au contact de la masse active est réalisée à une température généralement comprise entre 600°C et 1400°C, préférentiellement entre 800°C et 1000°C. Le temps de contact varie selon le type de charge combustible utilisée. Il varie typiquement entre 1 seconde et 20 minutes, par exemple de préférence entre 1 minute et 10 minutes, et plus préférentiellement entre 1 minute et 8 minutes pour une charge solide ou liquide, et par exemple de préférence de 1 à 20 secondes pour une charge gazeuse.

Un mélange comprenant les gaz issus de la combustion et les particules de la masse active est évacué au sommet de la zone de réduction 100. Des moyens de séparation de gaz/solide (non représentés), tels qu'un cyclone, permettent de séparer les gaz de combustion 13 des particules solides de la masse active dans leur état le plus réduit 15. Dans le cas de la présence d'imbrûlés pouvant survenir si la charge hydrocarbonée est solide, un dispositif de séparation solide/solide permettant de séparer les particules d'imbrûlés des particules de la masse active peut être mis en oeuvre en sortie du réacteur de combustion. Ce type de séparateur peut être associé à un ou plusieurs séparateurs gaz/solide disposés en aval du séparateur solide/solide. Les particules de la masse active ayant séjourné dans le réacteur de combustion, et séparées des gaz de combustion, sont envoyées vers la zone d'oxydation 110 pour être ré-oxydées. Les imbrûlés peuvent être recyclés vers le réacteur de réduction 100.

Dans le réacteur d'oxydation 110, la masse active est restaurée à son état oxydé MxOy au contact d'un gaz oxydant 10, typiquement de l'air ou de la vapeur d'eau, et de préférence de l'air, selon la réaction (2) ci-dessous, avant de retourner vers le réacteur de réduction 100, et après avoir été séparée du gaz appauvri en oxygène 11, typiquement de l'air dit « appauvri », évacué au sommet du réacteur d'oxydation 110.

MₓO_{y-2n-m/2} + (n+m/4) O₂ **→** MₓO_{y}

Où n et m représentent respectivement le nombre d'atomes de carbone et d'hydrogène ayant réagi avec la masse active dans le réacteur de combustion.

La température dans le réacteur d'oxydation est généralement comprise entre 600°C et 1400°C, préférentiellement entre 800 et 1000°C.

La masse active, passant alternativement de sa forme oxydée à sa forme réduite et inversement, décrit un cycle d'oxydo-réduction.

Les charges hydrocarbonées (ou combustibles) traitées peuvent être des charges hydrocarbonées solide ou liquide. Les charges solides peuvent être choisies parmi le charbon, le coke, le coke de pétrole (« pet-coke » en anglais), la biomasse, les sables bitumineux et les déchets ménagers. Les charges liquides peuvent être choisies parmi du pétrole, du bitume, le diesel, l'essence. De préférence la charge hydrocarbonée traitée est une charge solide, telle qu'énoncée ci-dessus.

La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de cuivre supportées sur alumine CuO/Al₂O₃ ou des particules d'oxyde de nickel supportées sur alumine NiO/Al₂O₄, de préférence des particules d'oxyde de cuivre supportées sur alumine CuO/Al₂O₃), avec ou sans liant, et présente les propriétés d'oxydo-réduction requises et les caractéristiques nécessaires à la mise en oeuvre de la fluidisation. La capacité de stockage en oxygène de la masse oxydo-réductrice est avantageusement comprise, suivant le type de matériau, entre 0,5% et 15 % poids. Avantageusement, la quantité d'oxygène effectivement transférée par l'oxyde métallique est comprise entre 0,5 % et 3 % poids, ce qui permet de n'utiliser qu'une fraction de la capacité totale de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures sur le parcours du porteur d'oxygène.

La masse active est sous la forme de particules fluidisables, appartenant aux groupes A, B, C ou D de la classification de Geldart, seuls ou en combinaison. De préférence, les particules de la masse active oxydo-réductrice appartiennent au groupe B de la classification de Geldart. A titre d'exemple, et de manière non limitative, les particules du groupe B utilisées présentent une granulométrie telle que plus de 90 % des particules ont une taille comprise entre 100 µm et 500 µm, de préférence comprise entre 150 µm et 300 µm.

De préférence, les particules de la masse active oxydo-réductrice, qui peuvent être oxydes métalliques, synthétiques ou minérais naturels, supportés ou non, ont une densité comprise entre 1000 kg/m³ et 5000 kg/m³ et préférentiellement entre 1200 kg/m³ et 4000 kg/m³.

Par exemple, les particules d'oxyde de nickel supportées sur alumine (NiO/NiAl₂O₄) présentent généralement une masse volumique de grain comprise entre 2500 et 3500 kg/m³ en fonction de la porosité du support et de la teneur en oxyde de nickel, typiquement de 3200 kg/m³ environ.

L'ilménite, minerai associant le titane et le fer (oxyde de fer et titane), présente une masse volumique de 4700 kg/m³.

La masse active oxydo-réductrice peut subir une phase d'activation de manière à augmenter ses capacités réactives, pouvant consister en une phase de montée en température, de préférence progressive, et de préférence sous atmosphère oxydante (par exemple sous air).

Les réacteurs d'oxydation et de combustion opèrent en lit fluidisés. Ils comprennent chacun au moins un système d'injection d'un gaz de fluidisation. Dans le réacteur de combustion, le gaz de fluidisation peut être du CO₂, qui peut être du CO₂ produit lors de la combustion et recyclé, ou de la vapeur d'eau. Dans le réacteur d'oxydation, le gaz de fluidisation est un gaz oxydant, de préférence de l'air.

Le réacteur d'oxydation comprend de préférence un lit fluidisé transporté. Avantageusement, la vitesse du gaz (phase gaz du lit) est comprise entre 2 m/s et 15 m/s, et préférentiellement comprise entre 3 m/s et 10 m/s. A titre d'exemple, un tel réacteur peut avoir un diamètre compris entre 1 m et 6 m pour une hauteur comprise entre 10 m et 30 m.

Le réacteur de combustion 100 est configuré de manière à comprendre un agencement d'un lit dense et d'un lit transporté. En particulier, le réacteur de combustion 100 comprend une enceinte inférieure comportant un lit fluidisé dense, surmontée par une enceinte supérieure comprenant un lit fluidisé transporté. L'enceinte supérieure a une section de passage plus faible que celle de l'enceinte inférieure, permettant d'accélérer et de transporter le mélange gaz-particules sortant de l'enceinte inférieure. De préférence, la vitesse du gaz dans l'enceinte inférieure est comprise entre 0,3 m/s et 3 m/s. De manière avantageuse, la vitesse du gaz dans l'enceinte supérieure du réacteur de combustion est comprise entre 3 m/s et 15m/s.

A titre d'exemple, le réacteur de combustion 100 peut avoir un diamètre compris entre 1 met 10 m, pour une hauteur comprise entre 3 m et 40 m.

De préférence, le rapport de section entre l'enceinte inférieure et l'enceinte supérieure est compris entre 2 et 15, préférentiellement de 3 à 10.

Par lit fluidisé dense on entend un lit bouillonnant ou un lit turbulent. La fraction volumique de solide dans un tel lit fluidisé dense est généralement comprise entre 0,25 et 0,50.

Par lit fluidisé dilué on entend un lit transporté. La fraction volumique de solide est généralement inférieure à 0,25.

La géométrie des réacteurs peut être parallélépipédique, cylindrique ou toute autre géométrie tridimensionnelle comprenant de préférence une symétrie de révolution. Par cylindrique on fait référence à un cylindre de révolution.

Avantageusement, le réacteur de combustion, en particulier les enceintes inférieure et supérieure, a une forme de parallélépipède, de préférence rectangle. En particulier, les enceintes inférieure et supérieure du réacteur de combustion ont une telle forme. Cette forme de réacteur est bien adaptée à une mise en oeuvre industrielle du CLC comportant des équipements de grande taille. Par grande taille, on entend des réacteurs donc la section de passage s'exprime en dizaines de m², sur des hauteurs de plusieurs dizaines de mètres. Elle permet par exemple de faciliter l'augmentation d'échelle de l'installation CLC par une duplication possible du réacteur dans une dimension afin d'en augmenter sa capacité. En outre, cette géométrie particulière a également pour avantage de simplifier la mise en place possible de matériaux réfractaires sur la face interne afin de protéger des fortes températures la paroi généralement métallique de l'enceinte du réacteur. De tels matériaux réfractaires peuvent être utilisés en combinaison avec des aciers standards en vue de limiter les coûts de fabrication. Par exemple, des couches de ciment réfractaire armé, ayant typiquement des épaisseurs généralement comprises entre 2 et 50 cm, généralement voisines de 20 cm, sur les faces internes exposées à l'écoulement et aux hautes températures permettent d'utiliser des aciers standards pour les parties externes du réacteur. Des briques peuvent également être utilisées en guise de matériau réfractaire sur les faces internes des parois de l'enceinte du réacteur.

Les matériaux utilisés pour réaliser les réacteurs et ses éléments constitutifs (admission(s), évacuation(s), sortie(s), etc.) peuvent être choisis parmi les matériaux réfractaires, par exemple de type béton réfractaire, brique réfractaire ou céramique, les aciers haute température, par exemple de type Hastelloy ^{®}, Incoloy ^{®}, Inconel ^{®} ou Manaurite ^{®}, ou des aciers conventionnels, par exemple de type acier inoxydable ou acier au carbone combinés à des matériaux réfractaires ou combinés à des moyens de refroidissement tels que des tubes dans lesquels circulent un fluide caloporteur.

Dans le réacteur de combustion, l'enceinte inférieure comporte un lit fluidisé dense et l'enceinte supérieure comprend un lit fluidisé transporté. Une telle géométrie est bien adaptée à la combustion de charges solides ou liquides, en particulier solides, qui requièrent un temps de contact avec les particules de la masse active suffisamment long pour tendre vers la combustion totale, et qui impliquent un première phase de gazéification de la charge solide ou liquide (en lit fluidisée dense), suivie d'une combustion de la charge gazéifiée (en lit fluidisé dense et en lit fluidisé transporté). La gazéification de la charge contribue à augmenter la vitesse du gaz dans l'enceinte inférieure de section de passage sensiblement constante. Cette augmentation de la vitesse du gaz est également réalisée du fait de la section de passage plus étroite dans l'enceinte supérieure.

Dans l'enceinte inférieure du réacteur de combustion, on passe d'un régime hétérogène donnant lieu à un lit bouillonnant constituant le lit dense de l'enceinte inférieure, à un régime turbulent avec une vitesse croissante du gaz, pour atteindre un régime de transport dans l'enceinte supérieure.

Lors de ce changement de régimes dans l'enceinte inférieure, les taille des bulles peuvent devenir très grande, jusqu'à s'approcher de la taille de la section de passage de l'enceinte inférieure, caractérisant le phénomène de pistonnage lors du régime de pistonnage transitoire entre le régime du lit bouillonnant et le régime turbulent, et poser les problèmes de fluctuation de pression, de vibration, d'hétérogénéité de température et de mélange solide/gaz tels que déjà décrits, et néfastes pour l'intégrité de l'installation CLC et les performances du procédé CLC.

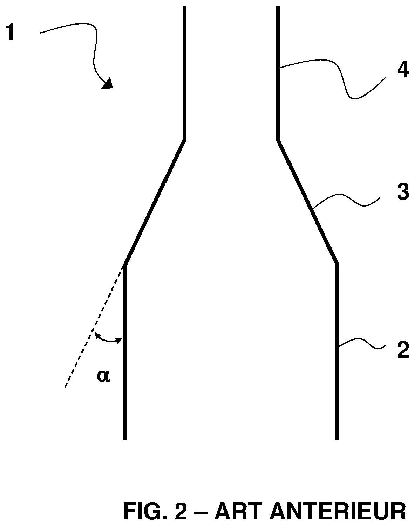

Un réacteur de combustion connu 1 est illustré schématiquement à la figure 2. Un tel réacteur de combustion est par exemple décrit dans la demande WO11151535. Il comporte une enceinte inférieure 2 comportant un lit dense et une enceinte supérieure 4 comportant un lit dilué. L'enceinte supérieure 4 est de forme allongée et de section de passage strictement inférieure à celle de l'enceinte inférieure, par exemple inférieure d'au moins 25 % à celle de l'enceinte inférieure, voire d'au moins 50 %. Cette enceinte supérieure 4 est un « riser ». Le changement de section permet d'augmenter la vitesse entre l'enceinte inférieure 2 et l'enceinte supérieure 4 et d'assurer la transition entre l'écoulement en phase dense et l'écoulement en phase diluée.

Ainsi, l'enceinte inférieure 2 comporte un conduit d'alimentation pour la charge hydrocarbonée, un conduit d'alimentation en particules de la masse active issue du réacteur d'oxydation, un système d'injection d'un gaz de fluidisation positionné à la base de l'enceinte 2, à un niveau inférieur à celui des conduits d'alimentation pour la charge hydrocarbonée et les particules de la masse active, et permettant la formation du lit dense. Par exemple, un gaz de fluidisation est introduit par des moyens spécifiques qui peuvent être des plaques perforées disposées en aval d'un distributeur qui peut être une boîte à vent alimentée par un conduit d'alimentation en ledit gaz. Ces plaques peuvent être inclinées d'un angle généralement compris entre 30° et 70° par rapport à l'horizontale et peuvent laisser dans la partie centrale un espace libre à l'écoulement des particules, permettant de soutirer à travers le distributeur une partie des particules sédimentant dans cette zone et constituées en majorité de cendres agglomérées.

L'enceinte inférieure 2 peut aussi comporter une ou plusieurs conduites de recyclage de particules d'imbrûlés reliées à des systèmes de séparation solide/solide (dispositifs de séparation par élutriation) et/ou gaz/solide (ex : cyclones).

Pour des raisons de simplification, tous ces éléments ne sont pas représentés sur la figure 2.

L'enceinte supérieure 4 comporte à son sommet une évacuation pour le mélange gazeux comportant les gaz de combustion et les particules de la masse active, et éventuellement des particules d'imbrûlés et des cendres. L'enceinte supérieure 4 peut également comporter une alimentation en particules de masse active.

Dans l'enceinte supérieure 4, peut être opérée la combustion de l'effluent gazeux issu de l'enceinte inférieure 2. Cet effluent gazeux comprend la charge solide gazéifiée, partiellement convertie, voire totalement convertie. Compte tenu des vitesses du gaz, le temps moyen de séjour du gaz dans cette enceinte supérieure 4 est généralement compris entre 1 seconde et 20 secondes, le temps moyen de séjour des solides variant entre 2 secondes et 1 minute. Dans ces conditions, et compte tenu de la nature diluée de l'écoulement et de la présence des particules de la masse active d'oxygène, les réactions sont essentiellement des réactions entre la phase gazeuse (charge gazéifiée) et les particules de la masse active.

Selon ce réacteur 1 connu, un conduit de section variable 3 permet de faire la jonction entre l'enceinte inférieure 2 et l'enceinte supérieure 4, et permet l'évacuation des effluents gazeux et des particules entrainées vers l'enceinte supérieure 4. Dans le cas d'enceintes de forme cylindrique par exemple, ce conduit est un cône 3. La paroi du cône 3 forme un angle α non nul avec les parois des enceintes inférieure et supérieure, i.e. avec la verticale.

Dans une telle configuration, les bulles entrainant les agglomérats de solides glissent sur la paroi conique 3, se concentrent à l'entrée de l'enceinte supérieure 4, et provoquent alors, lorsqu'elles éclatent, de fortes fluctuations de pression. Par agglomérats de solides (ou de particules solides) on entend des particules qui ont légèrement aggloméré entre elles pour former des amas de plus grande taille. Ces amas peuvent être entrainés par les bulles. L'entrainement d'agglomérats dans l'enceinte supérieure 4 créé un écoulement qui n'est pas uniforme, provoquant également des fluctuations de pression dans l'enceinte supérieure 4. Enfin, l'entraînement d'agglomérats de particules solides dans l'enceinte supérieure 4 est néfaste car ceux-ci peuvent provoquer à leur tour des phénomènes de pistonnage dans l'enceinte supérieure 4, phénomène d'autant plus susceptible de se produire que la section est réduite.

### Réacteur de combustion selon l'invention

Afin de diminuer ces fortes fluctuations de pression dans le réacteur de combustion, et particulièrement dans l'enceinte supérieure, il est proposé un nouveau réacteur de combustion.

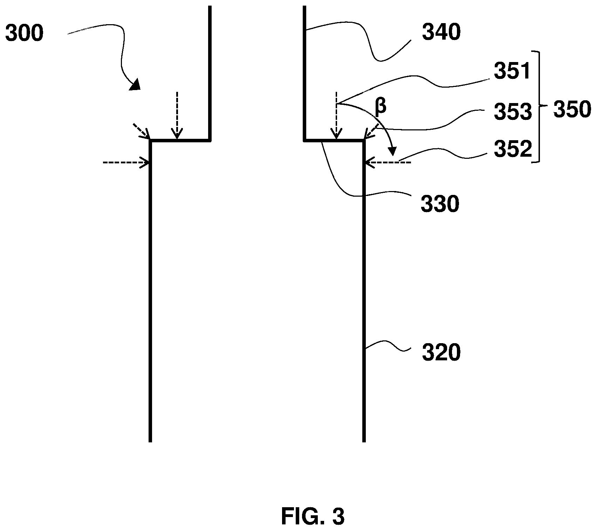

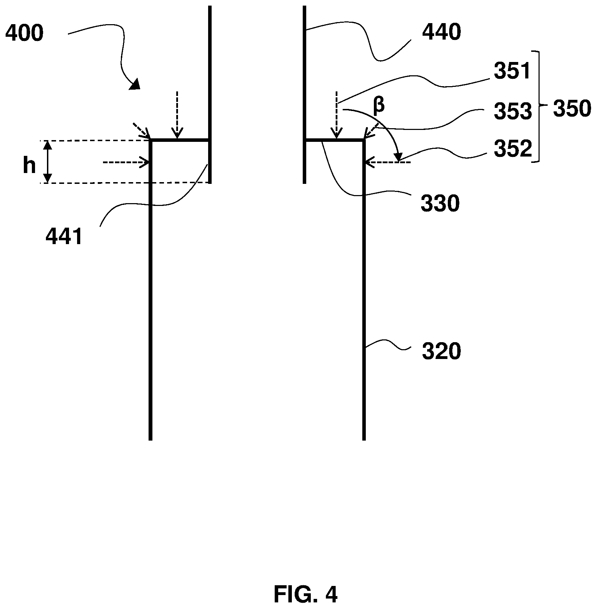

Les figures 3 et 4 illustrent, schématiquement et de manière non limitative, deux principaux modes de réalisation du réacteur de combustion selon l'invention. Sur les figures, les mêmes références désignent des éléments identiques ou analogues.

En référence à la figure 3, le réacteur de combustion 300 selon l'invention est configuré pour opérer en lit fluidisé. Il comporte :
- une enceinte inférieure 320 formant une première zone réactionnelle pour la combustion d'une charge hydrocarbonée en présence de particules d'une masse active d'oxydo-réduction, cette enceinte inférieure 320 comportant une première paroi latérale et étant configurée pour comporter un lit fluidisé dense ;
- une enceinte supérieure 340 de forme allongée et ayant une section de passage plus petite que la section de passage de l'enceinte inférieure 320 (« riser »), formant une deuxième zone réactionnelle pour la combustion des effluents gazeux issus de la combustion dans la partie inférieure 320, cette enceinte supérieure 340 comportant une deuxième paroi latérale et étant configurée pour comporter un lit fluidisé dilué ;
- une partie intermédiaire 330 connectant l'enceinte inférieure 320 à l'enceinte supérieure 340, cette partie intermédiaire 330 comportant une paroi interne formant un angle droit avec la première paroi latérale de l'enceinte inférieure 320 et avec la deuxième paroi latérale de l'enceinte supérieure 340.

Cette partie intermédiaire constitue en quelque sorte un plafond plat pour l'enceinte inférieure 320.

La restriction abrupte de section de passage entre l'enceinte inférieure 320 et l'enceinte supérieure 340, imposée par cette géométrie spécifique en angle droit de la partie intermédiaire 330 faisant la liaison entre les deux enceintes du réacteur de combustion, permet de briser les agglomérats de solides avant leur entrée dans l'enceinte supérieure 340, évitant l'entrainement d'agglomérats de particules solides dans le riser de plus petite section, limitant ainsi les fluctuations de pression.

Par paroi interne de la partie intermédiaire330, on entend la face de la paroi formant cette partie intermédiaire 330 située à l'intérieur de l'enceinte 320, en contact avec le lit fluidisé.

Selon une variante de réalisation, la partie intermédiaire 330 comprend une paroi externe, i.e. une face de la paroi formant cette partie intermédiaire 330 située à l'extérieur de l'enceinte 320, qui est légèrement courbée pour faciliter l'ancrage d'un matériau réfractaire. La courbure peut être de forme elliptique, et présenter un ratio des demi-axes (rapport entre le grand axe et la petit axe) de préférence compris entre 2 et 30, et de manière plus préférée compris entre 5 et 20. La forme de la paroi externe peut être de forme différente, telle que celles décrites dans le document normatif NFE81-100 spécifique aux fonds bombés. Des exemples de matériaux réfractaires ont été donnés plus haut en relation avec la description de l'installation et du procédé CLC illustré à la figure 1. Selon cette variante, il est bien conservé un toit plat pour l'enceinte inférieure à l'intérieur du réacteur, c'est-à-dire un angle droit pour la jonction à l'intérieure du réacteur (paroi interne de la partie intermédiaire 330) entre la paroi latérale de l'enceinte inférieure 320 et la paroi latérale de l'enceinte supérieure 340.

Le réacteur de combustion selon l'invention peut comprendre d'autres éléments similaires à ceux décrits plus haut pour le réacteur de combustion 1 selon l'art antérieur, non représentés sur la figure 3.

Ainsi, l'enceinte inférieure 320 comprend avantageusement :
- un conduit d'alimentation pour la charge hydrocarbonée ;
- un conduit d'alimentation en particules de la masse active issue du réacteur d'oxydation ;
- un système d'injection principal pour un gaz de fluidisation principal positionné à sa base. Ce système d'injection principal est de préférence situé à un niveau inférieur à celui des conduits d'alimentation pour la charge hydrocarbonée et les particules de la masse active, et permet la formation du lit dense. Comme pour l'enceinte inférieure 2 du réacteur selon l'art antérieur de la figure 2, un gaz de fluidisation est introduit par des moyens spécifiques qui peuvent être des plaques perforées disposées en aval d'un distributeur qui peut être une boîte à vent alimentée par un conduit d'alimentation en ledit gaz. Ces plaques peuvent être inclinées d'un angle généralement compris entre 30° et 70° par rapport à l'horizontale et peuvent laisser dans la partie centrale un espace libre à l'écoulement des particules, permettant de soutirer à travers le distributeur une partie des particules sédimentant dans cette zone et constituées en majorité de cendres agglomérées.

L'enceinte inférieure 320 peut en outre comprendre une ou plusieurs conduites de recyclage de particules d'imbrûlés reliées à des systèmes de séparation solide/solide (dispositifs de séparation par élutriation) et/ou gaz/solide (ex : cyclones).

L'enceinte supérieure 340 comprend avantageusement une évacuation à son sommet pour le mélange gazeux comportant les gaz de combustion et les particules de la masse active, et éventuellement des particules d'imbrûlés et des cendres.

L'enceinte supérieure 340 peut également comporter une alimentation en particules de masse active.

Comme pour l'enceinte supérieure 4 du réacteur selon l'art antérieur de la figure 2, l'enceinte supérieure 340 peut avoir une section de passage inférieure d'au moins 25 % à la section de passage de l'enceinte inférieure 320, voire inférieure d'au moins 50%. Le passage de la section de l'enceinte inférieure 320 à la section réduite de l'enceinte supérieure 340 permet d'augmenter la vitesse de l'écoulement entre les deux enceintes et d'assurer la transition entre l'écoulement en phase dense et l'écoulement en phase diluée.

Dans l'enceinte supérieure 340, peut être opérée la combustion de l'effluent gazeux issu de l'enceinte inférieure 320. Cet effluent gazeux comprend la charge solide gazéifiée, partiellement convertie, voire totalement convertie. Compte tenu des vitesses du gaz, le temps moyen de séjour du gaz dans cette enceinte supérieure est généralement compris entre 1 seconde et 20 secondes, le temps moyen de séjour des solides variant entre 2 secondes et 1 minute. Dans ces conditions, et compte tenu de la nature diluée de l'écoulement et de la présence des particules de la masse active d'oxygène, les réactions sont essentiellement des réactions entre la phase gazeuse (charge gazéifiée) et les particules de la masse active.

De préférence, l'enceinte supérieure comprend un lit fluidisé dilué ayant une fraction volumique de solide inférieure à 0,10.

Selon une variante, l'enceinte inférieure 320 comporte en outre un système d'injection secondaire 350 pour un gaz de fluidisation secondaire positionné au sommet de l'enceinte inférieure 320.

Selon cette variante, on peut injecter le gaz de fluidisation secondaire au sommet de l'enceinte inférieure 320 du réacteur de combustion 300, et de préférence former au moins un jet dans l'enceinte selon une direction formant un angle β compris entre 0 et 90° (valeurs inclues) avec la verticale. Ainsi, on peut réaliser des injections de gaz horizontales 352 (angle β égal à 90°), ou verticales 351 (angle β égal à 0), ou selon un angle β compris entre ces deux valeurs étant exclues, ou selon une combinaison de ces différentes directions. Ces injections de gaz supplémentaire en tête de l'enceinte supérieure 320 permettent de diminuer davantage les fluctuations de pression en brisant les gros agglomérats de solide avant leur arrivée dans l'enceinte supérieure 340.

Avantageusement, le débit du gaz de fluidisation secondaire est inférieur à 0,2×Q_{GP}, Q_{GP} étant le débit du gaz de fluidisation principal. De préférence, le débit du gaz de fluidisation secondaire est compris entre 0,02×Q_{GP} et 0,2×Q_{GP}, et plus préférentiellement compris entre 0,05×Q_{GP} et 0,15×Q_{GP}.

Selon une variante, l'enceinte inférieure comporte en outre un système d'injection tertiaire (non représenté) pour un gaz de fluidisation tertiaire positionné entre le système d'injection principal et le sommet de l'enceinte inférieure, configuré pour contrôler le niveau du lit dense On injecte ainsi un gaz de fluidisation tertiaire dans une zone du lit dense dans l'enceinte inférieure du réacteur de combustion de manière à contrôler le niveau du lit dense, en jouant sur l'entrainement des particules de solide. De cette manière, il est possible d'augmenter la distance entre la surface du lit et l'entrée de l'enceinte supérieure 340, c'est-à-dire d'avoir une hauteur de zone de désengagement plus grande favorisant la brisure des agglomérats de solides avant l'entrée des particules solides dans la zone supérieure de section inférieure. On rappelle que la zone de désengagement est la zone diluée au-dessus du lit dense (entre l'interface du lit dense et le haut de l'enceinte).

Selon cette variante, cette injection peut se faire de manière à former au moins un jet dans l'enceinte selon une direction formant un angle compris entre 90°, valeur inclue (direction horizontale), et 180°, valeur exclue, avec la verticale. Des jets selon plusieurs de ces directions peuvent aussi être réalisés.

Le gaz de fluidisation principal peut être du CO₂, par exemple du CO₂ produit lors de la combustion et recyclé, ou de la vapeur d'eau. Les autres gaz de fluidisation, secondaire et tertiaire, peuvent être de même nature que le gaz de fluidisation principal et provenir de la même source.

Une réacteur de combustion 400 selon un deuxième mode de réalisation de l'invention est illustré à la figure 4, et est en tout point identique au réacteur 300 décrit ci-dessus en relation avec la figure 3, à l'exception de l'enceinte supérieure 440, qui comporte un segment 441 pénétrant dans la partie inférieure de l'enceinte d'une hauteur h de préférence comprise entre 0,01xH et 0,3xH, H étant la hauteur de l'enceinte inférieure 320 du réacteur de combustion.

A titre d'exemple non limitatif, la hauteur H de l'enceinte inférieure 320 peut être comprise entre 3 m et 40 m, par exemple être de 20 m.

De la même manière, à titre d'exemple non limitatif, la hauteur de l'enceinte supérieure 440 peut être comprise entre 3 m et 40 m, par exemple être de 20 m.

Le ratio section de passage de l'enceinte inférieur sur section de passage de l'enceinte supérieure peut être compris entre 2 et 15, et préférentiellement compris entre 3 et 10.

Il en va de même pour les dimensions des enceintes supérieure 340 et inférieure 320 du réacteur 300 selon le premier mode de réalisation.

La présente invention porte également sur l'installation CLC comportant le réacteur de combustion selon l'invention tel que décrit ci-dessus, opérant en lit fluidisé pour effectuer la combustion de ladite charge hydrocarbonée au contact des particules de la masse active d'oxydo-réduction, et comprenant le réacteur d'oxydation opérant en lit fluidisé pour oxyder les particules de la masse active d'oxydo-réduction réduites provenant du réacteur de combustion par mise en contact avec un gaz oxydant. Les détails sur une telle installation ont déjà été donnés en relation avec la figure 1.

La présente invention porte également sur le procédé CLC mettant en oeuvre le réacteur de combustion selon l'invention tel que décrit ci-dessus, et comporte ainsi les principales les étapes suivantes :
- on met en contact des particules d'une masse active oxydo-réductrice avec la charge hydrocarbonée dans l'enceinte inférieure du réacteur de combustion au sein d'un lit fluidisé dense formé par l'injection d'un gaz de fluidisation principal ;
- on effectue une combustion de l'effluent gazeux issu de l'enceinte inférieure en présence de particules de la masse active oxydo-réductrice dans l'enceinte supérieure du réacteur de combustion, au sein d'un lit fluidisé dilué ;
- on effectue une oxydation des particules de la masse active oxydo-réductrice ayant séjourné dans le réacteur de combustion au sein d'un réacteur d'oxydation opérant en lit fluidisé avant de les renvoyer vers le réacteur de combustion.

L'effluent gazeux issu de l'enceinte inférieure comprend la charge solide gazéifiée ainsi que les effluents de la combustion réalisée dans l'enceinte inférieure. L'enceinte supérieure du réacteur de combustion reçoit également les particules de la masse active issues de la partie inférieure, ainsi qu'éventuellement de particules d'imbrûlés et possiblement des cendres volantes, notamment dans le cas d'une combustion de charges solides. Par particules d'imbrûlés on entend les particules de la charge hydrocarbonée solide qui n'ont pas fait l'objet d'une combustion totale, et qui contiennent pas conséquent encore des composés hydrocarbonés. Les cendres sont des éléments incombustibles résultant de la combustion totale des particules de combustible solide et pour lesquelles le temps de séjour dans le réacteur de combustion a été suffisant. Les cendres sont essentiellement de nature minérale. Elles comportent typiquement les composés suivants : SiO₂, Al₂O₃, Fe₂O₃, CaO, MgO, TiO₂, K₂O, Na₂O, SO₃, P₂O₅. Elles sont caractérisées par une taille de particules et une masse volumique plus faibles que les particules de la masse active (i.e. inférieure à 100 µm) et souvent plus faibles également que les particules d'imbrûlés.

Avant d'être envoyées au sein du réacteur d'oxydation pour leur oxydation, les particules de la masse active oxydo-réductrice ayant séjourné dans le réacteur de combustion sont séparées des gaz de combustion au moyen d'au moins un séparateur solide/solide et/ou solide/gaz. De tels séparateurs sont par exemple décrits dans les demandes de brevets WO11151535 et WO11151537. Par séparateur solide/solide on entend un dispositif permettant la séparation entre deux populations de particules solides : les particules du porteur d'oxygène et les particules d'imbrûlés qui sortent du réacteur de combustion.

Ainsi, on peut effectuer une séparation de particules d'imbrûlés et des particules de la masse active oxydo-réductrice contenues dans le mélange gazeux comportant des gaz de combustion issu de l'enceinte supérieure du réacteur de combustion dans un séparateur de particules solide/solide, on peut envoyer les particules de la masse active oxydo-réductrice ainsi séparées vers le réacteur d'oxydation, et on peut recycler les particules d'imbrûlés, éventuellement séparées des gaz de combustion dans au moins un étage de séparation gaz-solide, dans le réacteur de combustion.

Les autres détails d'un tel procédé CLC ont déjà été donnés ci-dessus dans la partie descriptive en relation avec la figure 1.

## Revendications

1. Réacteur de combustion (100, 300, 400) pour la combustion en boucle chimique configuré pour opérer en lit fluidisé comportant :
- une enceinte inférieure (320) formant une première zone réactionnelle pour la combustion d'une charge hydrocarbonée en présence de particules d'une masse active d'oxydo-réduction, ladite enceinte inférieure (320) comportant une première paroi latérale et étant configurée pour comporter un lit fluidisé dense ;
- une enceinte supérieure (340, 440) de forme allongée et ayant une section de passage plus petite que la section de passage de ladite enceinte inférieure (320), formant une deuxième zone réactionnelle pour la combustion des effluents gazeux issus de la combustion dans ladite partie inférieure, ladite enceinte supérieure (340, 440) comportant une deuxième paroi latérale et étant configurée pour comporter un lit fluidisé dilué ;
- une partie intermédiaire (330) connectant ladite enceinte inférieure (320) à ladite enceinte supérieure (340, 440), le réacteur de combustion étant **caractérisé en ce que** ladite partie intermédiaire (330) comporte une paroi interne formant un angle droit avec la première paroi latérale de l'enceinte inférieure (320) et avec la deuxième paroi latérale de l'enceinte supérieure (340, 440).

2. Réacteur selon la revendication 1, dans lequel l'enceinte inférieure (320) comporte un système d'injection principal pour un gaz de fluidisation principal positionné à la base de l'enceinte inférieure.

3. Réacteur selon la revendication 2, dans lequel l'enceinte inférieure (320) comporte en outre un système d'injection secondaire (350) pour un gaz de fluidisation secondaire positionné au sommet de l'enceinte inférieure.

4. Réacteur selon l'une quelconque des revendications 2 ou 3, dans lequel l'enceinte inférieure (320) comporte en outre un système d'injection tertiaire pour un gaz de fluidisation tertiaire positionné entre le système d'injection principal et le sommet de l'enceinte inférieure, configuré pour contrôler le niveau du lit dense.

5. Réacteur selon l'une quelconque des revendications précédentes, dans lequel la partie supérieure (440) du réacteur de combustion comporte un segment (441) pénétrant dans la partie inférieure (320) de l'enceinte d'une hauteur h de préférence comprise entre 0,01xH et 0,3xH, H étant la hauteur de l'enceinte inférieure (320) du réacteur de combustion.

6. Réacteur selon l'une quelconque des revendications précédentes, dans lequel le ratio de la section de passage de l'enceinte inférieure (320) sur la section de passage de l'enceinte supérieure (340, 440) est compris entre 2 et 15, et de préférence entre 3 et 10.

7. Réacteur selon l'une quelconque des revendications précédentes, dans lequel les enceintes inférieure (320) et supérieure (340, 440) du réacteur ont une forme de parallélépipède, de préférence rectangle.

8. Procédé de combustion en boucle chimique d'une charge hydrocarbonée mettant en oeuvre un réacteur de combustion (100, 300, 400) selon l'une quelconque revendications 1 à 7, comportant les étapes suivantes :
- on met en contact des particules d'une masse active oxydo-réductrice avec la charge hydrocarbonée dans l'enceinte inférieure (320) du réacteur de combustion (100, 300, 400) au sein d'un lit fluidisé dense formé par l'injection d'un gaz de fluidisation principal ;
- on effectue une combustion des effluents gazeux issus l'enceinte inférieure (320) en présence de particules de la masse active oxydo-réductrice dans l'enceinte supérieure (340, 440) du réacteur de combustion, au sein d'un lit fluidisé dilué ;
- on effectue une oxydation des particules de la masse active oxydo-réductrice ayant séjourné dans le réacteur de combustion (100, 300, 400) au sein d'un réacteur d'oxydation (110) opérant en lit fluidisé avant de les renvoyer vers le réacteur de combustion (100, 300, 400).

9. Procédé selon la revendication 8, dans lequel la charge hydrocarbonée est une charge solide, de préférence choisie parmi le charbon, le coke, le coke de pétrole, la biomasse, les sables bitumineux et les déchets ménagers, et dans lequel on effectue une séparation de particules d'imbrûlés et des particules de la masse active oxydo-réductrice contenues dans un mélange gazeux comportant des gaz de combustion issu de l'enceinte supérieure (340, 440) du réacteur de combustion (100, 300, 400) dans un séparateur de particules solide/solide, on envoie les particules de la masse active oxydo-réductrice ainsi séparées vers le réacteur d'oxydation (110), et on recycle les particules d'imbrûlés, éventuellement séparées des gaz de combustion dans au moins un étage de séparation gaz-solide, dans le réacteur de combustion (100, 300, 400).

10. Procédé selon l'une quelconque des revendications 8 et 9, dans lequel la vitesse superficielle du gaz dans l'enceinte inférieure (320) du réacteur de combustion est comprise entre 0,3 m/s et 3 m/s, et dans lequel la vitesse superficielle du gaz dans l'enceinte supérieure (340, 440) du réacteur de combustion est comprise entre 3 m/s et 15 m/s.

11. Procédé selon l'une quelconque des revendications 8 à 10, dans lequel la température dans le réacteur de combustion (100, 300, 400) est comprise entre 600°C et 1400°C, de préférence entre 800°C et 1000°C.

12. Procédé selon l'une quelconque des revendications 8 à 11, dans lequel on injecte un gaz de fluidisation secondaire au sommet de l'enceinte inférieure (320) du réacteur de combustion, de préférence formant un jet (351, 352, 353) selon une direction formant un angle β compris entre 0 et 90° avec la verticale.

13. Procédé selon la revendication 12, dans lequel le débit du gaz de fluidisation secondaire est compris entre 0,02×Q_{GP} et 0,2×Q_{GP}, Q_{GP} étant le débit du gaz de fluidisation principal.

14. Procédé selon l'une quelconque des revendications 8 à 13, dans lequel on injecte un gaz de fluidisation tertiaire dans une zone du lit dense dans l'enceinte inférieure (320) du réacteur de combustion (100, 300, 400) de manière à contrôler le niveau du lit dense.

15. Procédé selon l'une quelconque des revendications 8 à 14, dans lequel les particules de la masse active oxydo-réductrice appartiennent au groupe B selon la classification de Geldart.

## Patentansprüche

1. Verbrennungsreaktor (100, 300, 400) für die Chemical-Looping-Combustion, der dafür ausgelegt ist, im Fließbettverfahren betrieben zu werden, wobei er Folgendes aufweist:
- einen unteren Hohlraum (320), der einen ersten Reaktionsbereich für die Verbrennung einer kohlenwasserstoffartigen Charge in Gegenwart von Partikeln einer Redox-Wirkmasse bildet, wobei der untere Hohlraum (320) eine erste Seitenwand aufweist und dafür ausgelegt ist, ein dichtes Fließbett aufzuweisen;
- einen oberen Hohlraum (340, 440) von länglicher Form, der weiterhin einen kleineren Strömungsquerschnitt als der Strömungsquerschnitt des unteren Hohlraums (320) hat, wobei er einen zweiten Reaktionsbereich für die Verbrennung des gasförmigen Stoffstroms bildet, welcher aus der Verbrennung im unteren Abschnitt stammt, wobei der obere Hohlraum (340, 440) eine zweite Seitenwand aufweist und dafür ausgelegt ist, ein verdünntes Fließbett aufzuweisen;
- einen Zwischenabschnitt (330), welcher den unteren Hohlraum (320) mit dem oberen Hohlraum (340, 440) verbindet, wobei der Verbrennungsreaktor **dadurch gekennzeichnet ist, dass** der Zwischenabschnitt (330) eine Innenwand aufweist, die einen rechten Winkel mit der ersten Seitenwand des unteren Hohlraums (320) und mit der zweiten Seitenwand des oberen Hohlraums (340, 440) bildet.

2. Reaktor nach Anspruch 1, wobei der untere Hohlraum (320) ein Haupteinleitungssystem aufweist, das für ein Hauptfluidisierungsgas bestimmt ist und an der Basis des unteren Hohlraums angeordnet ist.

3. Reaktor nach Anspruch 2, wobei der untere Hohlraum (320) weiterhin ein Sekundäreinleitungssystem (350) aufweist, das für ein Sekundärfluidisierungsgas bestimmt ist und an der Spitze des unteren Hohlraums angeordnet ist.

4. Reaktor nach einem beliebigen der Ansprüche 2 oder 3, wobei der untere Hohlraum (320) weiterhin ein Tertiäreinleitungssystem aufweist, das für ein Tertiärfluidisierungsgas bestimmt ist und zwischen dem Haupteinleitungssystem und der Spitze des unteren Hohlraums angeordnet ist, wobei es dafür ausgelegt ist, den Pegel des dichten Bettes zu steuern.

5. Reaktor nach einem beliebigen der vorhergehenden Ansprüche, wobei der obere Abschnitt (440) des Verbrennungsreaktors einen Teilbereich (441) aufweist, welcher um eine Höhe h, die vorzugsweise im Bereich von 0,01×H bis 0,3×H liegt, in den unteren Abschnitt (320) des Hohlraums eindringt, wobei H die Höhe des unteren Hohlraums (320) des Verbrennungsreaktors ist.

6. Reaktor nach einem beliebigen der vorhergehenden Ansprüche, wobei das Verhältnis des Strömungsquerschnitts des unteren Hohlraums (320) zum Strömungsquerschnitt des oberen Hohlraums (340, 440) im Bereich von 2 bis 15, und vorzugsweise von 3 bis 10, liegt.

7. Reaktor nach einem beliebigen der vorhergehenden Ansprüche, wobei der untere (320) und der obere (340, 440) Hohlraum des Reaktors die Form eines Parallelepipeds, vorzugsweise eines Quaders, haben.

8. Verfahren zur Chemical-Looping-Combustion einer kohlenwasserstoffartigen Charge, bei welchem ein Verbrennungsreaktor (100, 300, 400) gemäß einem beliebigen der Ansprüche 1 bis 7 zum Einsatz gebracht wird, wobei es die folgenden Schritte umfasst:
- Inkontaktbringen von Partikeln einer Redox-Wirkmasse mit der kohlenwasserstoffartigen Charge in dem unteren Hohlraum (320) des Verbrennungsreaktors (100, 300, 400) innerhalb eines dichten Fließbetts, wie es durch Einleiten eines Hauptfluidisierungsgases gebildet wird;
- Durchführen einer Verbrennung des gasförmigen Stoffstroms, welcher aus dem unteren Hohlraum (320) stammt, in Gegenwart von Partikeln der Redox-Wirkmasse im oberen Hohlraum (340, 440) des Verbrennungsreaktors, innerhalb eines verdünnten Fließbetts;
- Durchführen einer Oxidation der Partikel der Redox-Wirkmasse, welche sich in dem Verbrennungsreaktor (100, 300, 400) befunden haben, innerhalb eines Oxidationsreaktors (110), welcher im Fließbettverfahren betrieben wird, woraufhin diese in den Verbrennungsreaktor (100, 300, 400) zurückgeleitet werden.

9. Verfahren nach Anspruch 8, wobei es sich bei der kohlenwasserstoffartigen Charge um eine feststoffliche Charge handelt, die vorzugsweise aus Kohle, Koks, Petrolkoks, Biomasse, Ölsanden und Haushaltsabfällen ausgewählt ist, und wobei in einer Feststoff/Feststoff-Partikeltrennvorrichtung eine Trennung der unverbrannten Partikel und der Partikel der Redox-Wirkmasse durchgeführt wird, wie sie in einer Gasmischung enthalten sind, die Verbrennungsgase aufweist, welche aus dem oberen Hohlraum (340, 440) des Verbrennungsreaktors (100, 300, 400) stammen, um die Partikel der Redox-Wirkmasse, welche auf diese Weise abgetrennt wurden, dem Oxidationsreaktor (110) zuzuführen, und die unverbrannten Partikel, welche gegebenenfalls in mindestens einem Schritt der Gas/Feststoff-Trennung abgetrennt wurden, in den Verbrennungsreaktor (100, 300, 400) zurückzuführen.

10. Verfahren nach einem beliebigen der Ansprüche 8 und 9, wobei die Oberflächengeschwindigkeit des Gases in dem unteren Hohlraum (320) des Verbrennungsreaktors im Bereich von 0,3 m/s bis 3 m/s liegt, und wobei die Oberflächengeschwindigkeit des Gases in dem oberen Hohlraum (340, 440) des Verbrennungsreaktors im Bereich von 3 m/s bis 15 m/s liegt.

11. Verfahren nach einem beliebigen der Ansprüche 8 bis 10, wobei die Temperatur im Verbrennungsreaktor (100, 300, 400) im Bereich von 600 °C bis 1400 °C, vorzugsweise von 800 °C bis 1000 °C, liegt.

12. Verfahren nach einem beliebigen der Ansprüche 8 bis 11, wobei ein Sekundärfluidisierungsgas an der Spitze des unteren Hohlraums (320) des Verbrennungsreaktors eingeleitet wird, wobei es vorzugsweise einen Strahl (351, 352, 353) gemäß einer Richtung bildet, welche mit der Vertikalen einen Winkel β im Bereich von 0 bis 90° bildet.

13. Verfahren nach Anspruch 12, wobei die Flussrate des Sekundärfluidisierungsgases im Bereich von 0,02×Q_{GP} bis 0,2xQGP liegt, wobei QGP die Flussrate des Hauptfluidisierungsgases ist.

14. Verfahren nach einem beliebigen der Ansprüche 8 bis 13, wobei in einen Bereich des dichten Bettes im unteren Hohlraum (320) des Verbrennungsreaktors (100, 300, 400) ein Tertiärfluidisierungsgas derart eingeleitet wird, dass der Pegel des dichten Bettes gesteuert wird.

15. Verfahren nach einem beliebigen der Ansprüche 8 bis 14, wobei die Partikel der Redox-Wirkmasse gemäß der Klassifikation nach Geldart der Gruppe B angehören.

## Claims

1. Combustion reactor (100, 300, 400) for chemical looping combustion configured to operate as fluidized bed comprising:
- a lower chamber (320) forming a first reaction zone for the combustion of a hydrocarbon feedstock in the presence of particles of an oxidation/reduction active mass, said lower chamber (320) comprising a first side wall and being configured to comprise a dense fluidized bed;
- an upper chamber (340, 440) of elongated shape and having a smaller passage section than the passage section of said lower chamber (320), forming a second reaction zone for the combustion of the gaseous effluents resulting from the combustion in said lower part, said upper chamber (340, 440) comprising a second side wall and being configured to comprise a dilute fluidized bed;
- an intermediate part (330) connecting said lower chamber (320) to said upper chamber (340, 440),
the combustion reactor being **characterized in that** said intermediate part (330) comprises an internal wall forming a right angle with the first side wall of the lower chamber (320) and with the second side wall of the upper chamber (340, 440).

2. Reactor according to Claim 1, in which the lower chamber (320) comprises a main injection system for a main fluidization gas positioned at the base of the lower chamber.

3. Reactor according to Claim 2, in which the lower chamber (320) additionally comprises a secondary injection system (350) for a secondary fluidization gas positioned at the top of the lower chamber.

4. Reactor according to either one of Claims 2 and 3, in which the lower chamber (320) additionally comprises a tertiary injection system for a tertiary fluidization gas positioned between the main injection system and the top of the lower chamber, configured to control the level of the dense bed.

5. Reactor according to any one of the preceding claims, in which the upper part (440) of the combustion reactor comprises a segment (441) penetrating into the lower part (320) of the chamber by a height h preferably of between 0.01×H and 0.3×H, H being the height of the lower chamber (320) of the combustion reactor.

6. Reactor according to any one of the preceding claims, in which the ratio of the passage section of the lower chamber (320) to the passage section of the upper chamber (340, 440) is between 2 and 15, and preferably between 3 and 10.

7. Reactor according to any one of the preceding claims, in which the lower (320) and upper (340, 440) chambers of the reactor have a parallelepipedal, preferably rectangular, shape.

8. Process for the chemical looping combustion of a hydrocarbon feedstock employing a combustion reactor (100, 300, 400) according to any one of Claims 1 to 7, comprising the following steps:
- particles of an oxidation/reduction active mass are brought into contact with the hydrocarbon feedstock in the lower chamber (320) of the combustion reactor (100, 300, 400) within a dense fluidized bed formed by the injection of a main fluidization gas;
- combustion of the gaseous effluents resulting from the lower chamber (320) is carried out in the presence of particles of the oxidation/reduction active mass in the upper chamber (340, 440) of the combustion reactor, within a dilute fluidized bed;
- oxidation of the particles of the oxidation/reduction active mass which have stayed in the combustion reactor (100, 300, 400) is carried out within an oxidation reactor (110) operating as fluidized bed before returning them to the combustion reactor (100, 300, 400).

9. Process according to Claim 8, in which the hydrocarbon feedstock is a solid feedstock, preferably chosen from coal, coke, pet-coke, biomass, tar sands and household waste, and in which separation of particles of unburnt residues and particles of the oxidation/reduction active mass contained in a gas mixture comprising combustion gases resulting from the upper chamber (340, 440) of the combustion reactor (100, 300, 400) is carried out in a solid/solid particles separator, the particles of the oxidation/reduction active mass thus separated are sent to the oxidation reactor (110), and the particles of unburnt residues, optionally separated from the combustion gases in at least one gas/solid separation stage, are recycled in the combustion reactor (100, 300, 400) .

10. Process according to either one of Claims 8 and 9, in which the superficial velocity of the gas in the lower chamber (320) of the combustion reactor is between 0.3 m/s and 3 m/s, and in which the superficial velocity of the gas in the upper chamber (340, 440) of the combustion reactor is between 3 m/s and 15 m/s.

11. Process according to any one of Claims 8 to 10, in which the temperature in the combustion reactor (100, 300, 400) is between 600°C and 1400°C, preferably between 800°C and 1000°C.

12. Process according to any one of Claims 8 to 11, in which a secondary fluidization gas is injected at the top of the lower chamber (320) of the combustion reactor, preferably forming a jet (351, 352, 353) along a direction forming an angle β of between 0 and 90° with the vertical.

13. Process according to Claim 12, in which the flow rate of the secondary fluidization gas is between 0.02×Q_{MG} and 0.2×Q_{MG}, Q_{MG} being the flow rate of the main fluidization gas.

14. Process according to any one of Claims 8 to 13, in which a tertiary fluidization gas is injected into a zone of the dense bed in the lower chamber (320) of the combustion reactor (100, 300, 400) so as to control the level of the dense bed.

15. Process according to any one of Claims 8 to 14, in which the particles of the oxidation/reduction active mass belong to group B according to the Geldart classification.
